# EUROPEAN PATENT SPECIFICATION

(11) **EP 3 065 533 B1**
(45) Date of publication and mention of the grant of the patent: **18.04.2018**
(21) Application number: 13807943.9
(22) Date of filing: 08.11.2013
(51) Int. Cl.: A01G 3/025

(54) **PULLING MEMBER FOR PRUNING TOOL**
ZUGELEMENT FÜR EINE ASTSCHERE
ELÉMENT DE TRACTION POUR OUTIL D'ÉLAGAGE

(43) Date of publication of application: 14.09.2016
(73) Proprietor: Husqvarna AB, 56182 Huskvarna (SE)
(72) Inventor: KOHL, Peter, 89257 Illertissen (DE); MISSEL, Patrick, 89198 Westerstetten (DE); BROBEIL, Achim, 89160 Dornstadt (DE)
(74) Representative: Finkele, Rolf
(86) International application number: PCT/EP2013/073404
(87) International publication number: WO 2015/067318

(56) References cited:
- DE-A1- 3 640 390
- US-A- 82 868
- US-A- 2 241 679
- US-A1- 2010 299 938

## Description

### TECHNICAL FIELD

The present invention relates to a tool, and more particularly to a pulling member of a pruning tool.

### BACKGROUND

Tools with pulling members, such as pruning shears, are well known in the art. Pruning shear with drive cable arrangement includes a pole, an implement which includes at least one movable component, a drive cable, wherein an end of the drive cable is connected to the at least one movable component via a transmission, and a pulling member, wherein other end of the drive cable is connected to the pulling member.

DE published application 36 40 390 discloses a pruning shear which comprises a cutting head with a carrier and a cable arrangement having a cable. A handle is offset from the pole with a coiling section towards the direction of the pole and the drive cable is coiled in such a manner that it runs close to the pole.

The cable is attached to the cutting head via a guide roller and a storage device is disposed on the carrier which is used for storing the cable. Pulling the cable actuates a pivoting movement of the cutting head and a cutting action is carried out in a guided way. However, the configuration of the cable lying on the carrier may not be a clean operation as some portion of the cable always lies on the carrier during pruning operation.

US Patent 82,868 issued to Benjamin M. Parks discloses a pruning hook device which comprises a knife blade set, a lever arrangement along with lever rods and a hand-slide component slidable along a rod. The two-fold lever arrangement with the drive cables as seen from the direction of the pulling member connected to the distal end of the levers increases force. This technology involves couple of lever arrangements and the individual movement of each lever is interdependent on the subsequent lever thus involving a complex pruning kinematics. Pulling the hand-slide component along the rod actuates a pivot movement of a movable knife of the knife blade set and thus pruning action is carried out. The configuration helps in prevention of any component overlap or overlying.

With the pole pruner described with German publication DE 34 40 390 A1 the cutting device is manipulated via a drive cable extending between cutting device and a pulling member that is slidable mounded on a pole. The pulling member comprises a spooling arrangement for the drive cable. The spooling arrangement has a gripping portion attached to it that is extending away from the pole. The first point of contact of the drive cable with its spooling arrangement is arranged close to the pole which is opposite the side of the spooling arrangement to which the gripping portion is attached. While the cutting implement can be pivoted into different angular postions the pruning tool is designed such that with any orientation of the cutting implement the drive cable is always running in "correct parallel alignment" with the longitudinal extension of the pole.

Therefore, in light of the foregoing, there is a need for an improved pulling arrangement in a hand-held tool.

### SUMMARY

In view of the above, it is an objective of the present invention to solve or at least reduce the problems discussed above. The objective is at least partially achieved according to a tool with a drive cable arrangement and a pulling member, in an embodiment of the present invention. The tool may be a pruning shear. The tool includes an implement having at least one movable component. The movable component may be a movable blade, and preferably the implement further includes a stationary blade, such that the movable blade is pivotally connected to the stationary blade. A drive cable is attached to the movable blade at a first end of the drive cable. Further, a pole is coupled with the implement and a pulling member is slidably mounted on the pole. A second end of the drive cable is coupled to the pulling member, wherein a sliding movement of the pulling member is configured to actuate the movable blade through the drive cable. The pulling member includes a gripping portion defining a gripping axis transverse to a longitudinal axis of the pole. .The gripping axis is offset relative to an outer surface of the pole and also, a first point of contact of the drive cable with the pulling member from a direction of the implement is offset from the outer surface of the pole at a distance close to the offset of the gripping axis. Further, the drive cable extends along a line starting from the first point of contact towards the implement such that the drive cable forms an angle, at a second point of contact of the drive cable towards the implement, relative to the longitudinal axis of the pole. The angle is equal to or less than 20 degrees and may be about 5 degrees.

According to an aspect of the present invention, the angle formation between the drive cable and the longitudinal axis of the pole helps in easy actuation of the pulling member without any tilting of the pulling member during the actuation of the tool. Also, the angle helps in providing enough clearance between the drive cable and the pole to prevent any obstruction to the drive cable. Thus, ergonomics of the tool may improve.

The various shapes of the pulling member includes a D-shaped pulling member, and a T-shaped pulling member to provide an improved gripping while sliding on the pole resulting in an effective transmission of pulling force thus helping in cutting the branches with an optimal cutting force .

The pulling member comprising a connecting portion may be removably connected to an intermediate portion of the implement facilitating the storage of pulling member. According to an embodiment, the intermediate portion of the implement may be formed as a handle and the handle includes a cavity configured to removably receive the connecting portion of the pulling member. Thus, the tool also provides an arrangement for storage of the pulling member when the tool is used without a pole.

According to an embodiment, the pulling member further includes an auxiliary gripping portion disposed along the longitudinal axis of the pole with a hollow portion of the auxiliary gripping portion slidably mounted on the pole. The auxiliary gripping portion provides an additional gripping area in addition to the gripping portion of the pulling member. These gripping areas, gripping portion and auxiliary gripping portion, provide an effective usage of both the hands with one hand holding the tool using auxiliary gripping portion while the other hand can be utilized for actuating the drive cable by holding gripping portion.

The pulling member further includes a drive cable coiling arrangement. According to a further embodiment, the pulling member includes a drive cable uncoiling arrangement. The drive cable coiling arrangement may ensure the windings of the extra drive cable and avoid twisting during the cutting operation. The drive cable uncoiling arrangement may ensure for the smooth removal of the drive cable from the drive cable coiling arrangement. Thus, ergonomics of the tool may improve.

### BRIEF DESCRIPTION OF THE DRAWINGS

The invention will be described in more detail with reference to the enclosed drawings, wherein:
FIG. **1A** illustrates a perspective view of a tool, according to an embodiment of the present invention;
FIG. **1B** illustrates a perspective view of a tool, according to another embodiment of the present invention;
FIG. **2** illustrates a front view of a pulling member for the tool of FIGS. **1A** and **1B****;**
FIG. **3A** illustrates a perspective view of the tool with a pulling member in an uncoupled configuration, according to another embodiment of the present invention;
FIG. **3B** illustrates a side view of the tool with the pulling member of FIG. **3A** in a coupled configuration;
FIGS. **4A** and **4B** illustrate exemplary views of a D-shaped pulling member, according to an embodiment of the present invention; and
FIGS. **5A** and **5B** illustrate exemplary views of a D-shaped pulling member, according to another embodiment of the present invention; and
FIG. 6 illustrates a perspective view of a T-shaped pulling member, according to yet another embodiment of the present invention.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention can be utilized in other embodiments and even other types of structures and/or methods. In the drawings, like numbers refer to like elements.

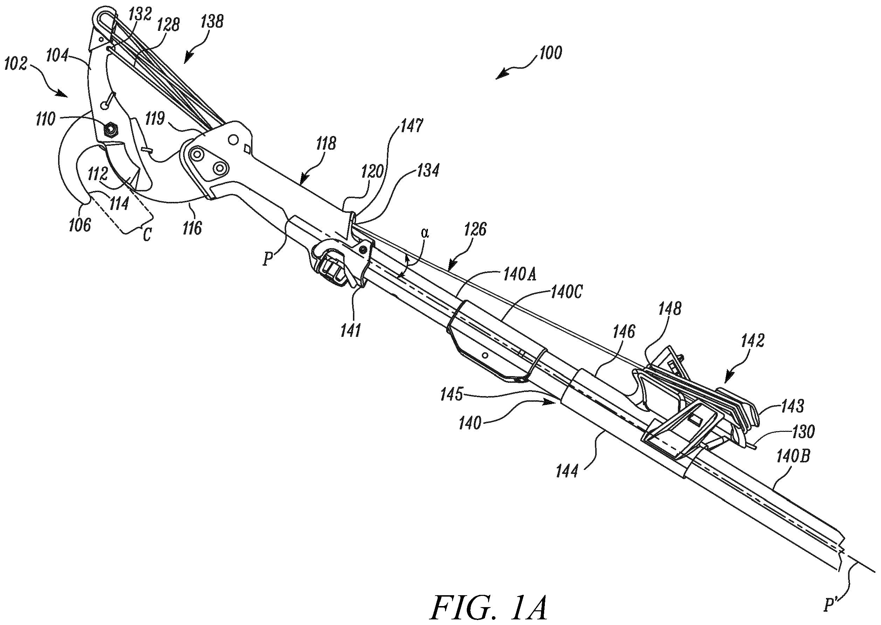

FIG. **1A** illustrates a perspective view of a tool **100,** according to an embodiment of the present invention. The tool **100,** as illustrated in FIG. **1A****,** is a pruning shear. In various other embodiments, the tool **100** may be a pruning lopper, secateurs, etc. The tool **100** may be used for pruning the branches or twigs of a tree.

The tool **100** includes an implement **102** having at least one movable component. As illustrated, the implement **102** includes a blade arrangement with the movable component, embodied as a movable blade **104,** pivotally connected to a stationary blade **106.** The movable blade **104** may perform a pivotal movement with respect to the stationary blade **106** about a pivot point **110** during a cutting action. The movable blade **104** and the stationary blade **106** may include cutting edges **112** and **114,** respectively. The cutting edges **112** and **114** may be sharpened and/or be serrated in order to cut the branches or twigs. The stationary blade **106** and the movable blade **104** of the tool **100** forms a cutting jaw **C.** The cutting jaw **C** may include an area formed between the cutting edges **112, 114** of the movable blade **104** and the stationary blade **106,** respectively. Further, the stationary blade **106** may be designed to provide guidance to the branches to move towards the cutting edges **112, 114.** Moreover, the stationary blade **106** may be substantially curved at a distal end **116** which helps in avoiding a hand of a user to slide towards the cutting edges **112** and **114** during the cutting action. In various other embodiments, the movable component **104** may include two or more movable blades. Further, the various details of the implement **102,** as illustrated in the FIG. **1A****,** are purely exemplary in nature, and the implement **102** may include any other design within the scope of the present invention.

Further, the tool **100** may include an intermediate portion **118** coupled to the implement **102.** In an embodiment, the intermediate portion **118** may be integrally formed with the stationary blade **106** and extends between a first end **119** and a second end **120.** The first end **119** of the intermediate portion **118** may be coupled to the distal end **116** of the stationary blade **106.**......

The tool **100** further includes a drive cable **126** having a first end **128** and a second end **130.** The first end **128** of the drive cable **126** is fixed to the movable blade **104** at a connect point **132.** The second end **130** of the drive cable **126** is received through a channel **134** provided in the intermediate portion **118.** Alternatively, the drive cable **126** may run free beside the intermediate portion **118.** The drive cable **126** may pass through a transmission system **138** such as pulley arrangement, a lever arrangement, a gear arrangement, a chain drive, a pneumatic arrangement, a hydraulic arrangement, or a combination thereof.

Further, the tool **100** includes a pole **140** detachably connected to the intermediate portion **118** of the implement **102.** In an embodiment, the second end **120** of the intermediate portion **118** and the pole **140** may be detachably connected to each other by using a male and female coupler (not shown) such that a longitudinal axis of the intermediate portion **118** is aligned with a longitudinal axis **PP'** of the pole **140.** A safety clasp **141** is further configured to prevent any unintentional detachment of the pole **140** from the intermediate portion **118.** Further, the pole **140** may be a telescopic pole and include a first tube **140A,** a second tube **140B,** and a coupler **140C** that is configured to detachably connect the first tube **140A** to the second tube **140B.** In a locked configuration, the coupler **140C** may lock the first and second tubes **140A, 140B** relative to each other. In an unlocked configuration, the coupler **140C** may allow the first and second tubes **140A, 140B** to telescopically slide relative to each other. The first and second tubes **140A, 140B** are shown to be substantially cylindrical. However, the first and second tubes **140A, 140B** may be of any other cross-section, for example, elliptical, polygonal, or the like, within the scope of the present invention. The pole **140** may enable pruning of branches and/or twigs located at various heights from the ground.

Further, the tool **100** includes a pulling member **142.** The pulling member **142** includes a gripping portion such as a primary gripping portion **143,** and an elongate portion **144.** The elongate portion **144** of the pulling member **142** includes a hollow portion **145** which is slidably disposed on the pole **140.** The pulling member **142** may include an auxiliary gripping portion **146** positioned on the elongate portion **144.** The primary gripping portion **143** and the auxiliary gripping portion **146** may facilitate gripping by the user and perform the pulling action via the pulling member **142.** The second end **130** of the drive cable **126** is coupled to the pulling member **142.** In an embodiment, the second end **130** of the drive cable **126** which is passed through the channel **134** of the intermediate portion **118** forms a first point of contact **148** of the drive cable **126** with the pulling member **142** from a direction of the implement **102.** Eventually, using the second end **130** the drive cable **126** is coiled at the pulling member **142** for storage. The pulling member **142** is configured to move the drive cable **126** in order to transmit a pulling force and actuate the movable blade **104** in the implement **102.** Further, the drive cable **126** forms a second point of contact **147** of the drive cable **126** with an inlet of the channel **134** provided in the intermediate portion **118** from a direction of the pulling member **142** towards the implement **102.**

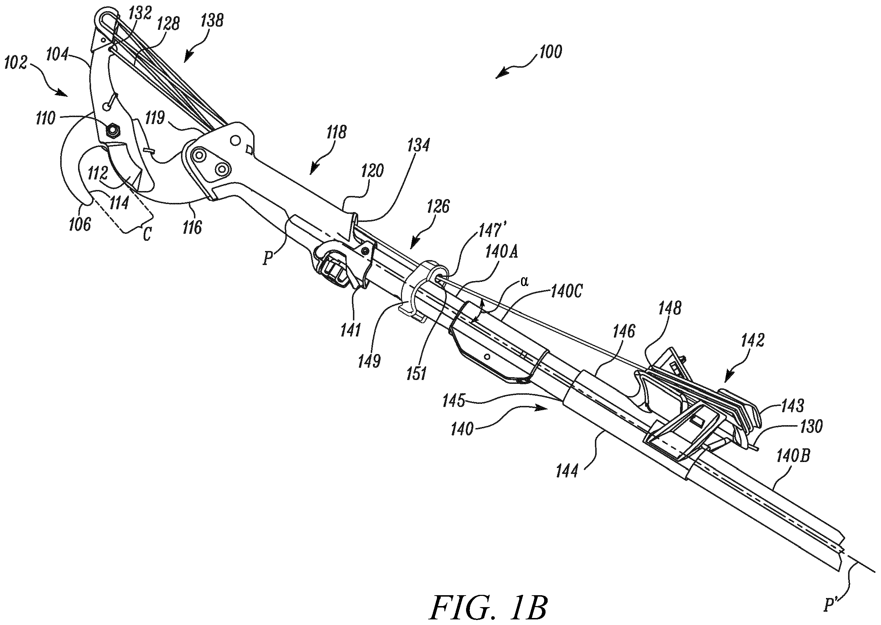

FIG. **1B** illustrates a perspective view of a tool **100,** according to another embodiment of the present invention. As illustrated in FIG. 1B, a guiding member **149** is disposed on the pole **140.** The guiding member **149** may include a hole **151** through which the second end **130** of the drive cable **126** is received to form the second point of contact **147'** of the drive cable with the guiding member **149** from a direction of the pulling member **142** towards the implement **102.**

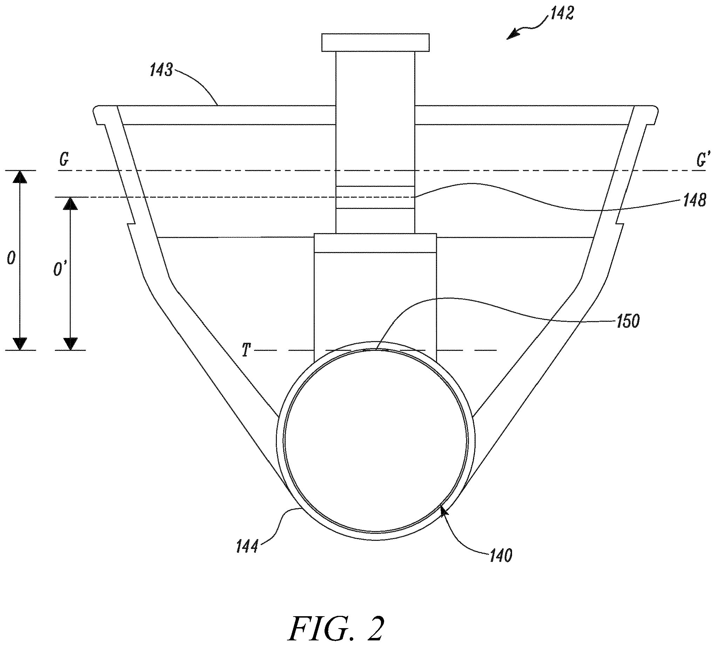

FIG. **2** illustrates a front view of the pulling member **142** for the tool **100** of FIGS. **1A** and **1B****.** The pulling member **142** includes a gripping axis **GG'** defined along the primary gripping portion **143.** The gripping axis **GG'** of the primary gripping portion **143** is transverse to the longitudinal axis **PP'** of the pole **140.** The gripping axis **GG'** is offset relative to an outer surface **150** of the pole **140** by a first distance **O.** As illustrated, the first distance **O** corresponds to a distance between a substantially horizontal tangent line **T** on the outer surface **150** of the pole **140** and the gripping axis **GG'.** Further, the first point of contact **148** of the drive cable **126** is offset from the outer surface **150** by a second distance **O'** substantially equal to the first distance **O**. Thus, the offset of the first point of contact **148** of the drive cable **126** with the pulling member **142** from a direction of the implement **102** is close to the offset of the gripping axis **GG'.**

Referring back to FIGS. **1A** and **1B****,** in the above arrangement of, the drive cable **126** extending along a line starting from the first point of contact **148** towards the implement **102** forms an angle **α** at the second point of contact **147, 147'** of the drive cable **126** relative to the longitudinal axis **PP'** of the pole **140.** According to an embodiment of the present invention, the angle **α** is less than or equal to 20 degrees. In another embodiment, the angle **α** is about 5 degrees. During the cutting action, the actuation of the pulling member **142** with the angle **α** formed between the drive cable **126** and the longitudinal axis **PP'** of the pole **140** provides enough clearance between the drive cable **126** and the pole **140** to prevent any obstruction to the drive cable **126.** Also, the angle **α** provides an easy actuation of the pulling member **142** without any tilting of the pulling member **142** during the actuation and also results in an ergonomic design.

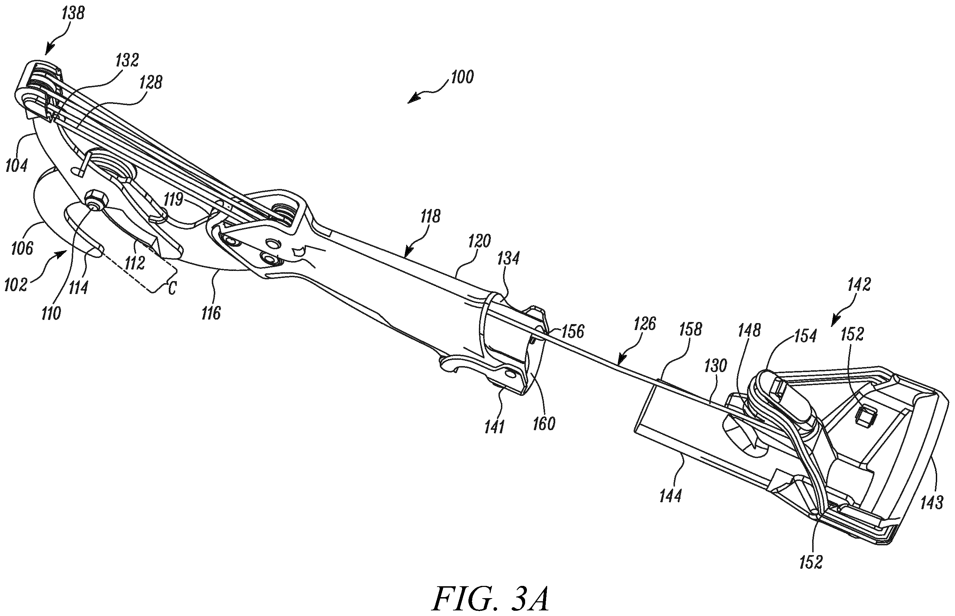

FIG. **3A** illustrates a perspective view of the tool **100** with the pulling member **142** in an uncoupled configuration, according to yet another embodiment of the present invention. The pulling member **142** includes a fixation clip **152.** The fixation clip **152** may fix the second end **130** of the drive cable **126** on the pulling member **142.** The pulling member 142 may include two fixation clips **152** positioned on either sides of the gripping portion **143.** Further, as illustrated in FIG. **3A****,** the second end **120** of the intermediate portion **118** includes a first connecting portion **156.** Further, the auxiliary gripping portion **146** is formed as a second connecting portion **158.** The first connecting portion **156** of the intermediate portion **118** is configured to removably couple with the second connecting portion **158** of the pulling member **142.** In an embodiment, the first connecting portion **156** includes a cavity **160** such that a diameter of the cavity **160** is larger than the diameter of the second connecting portion **158.** The cavity **160** of the first connecting portion **156** is configured to at least partly and removably receive the second connecting portion **158** of the pulling member **142.** The cavity **160** may be configured to store the pulling member **142** while not in use and required to be stored without the pole **140.** In an embodiment, the safety clasp **141** may be configured to retain the second connecting portion **158** within the cavity **160.** In another embodiment, the cavity **160** of the first connecting portion **156** may include a male connector. The male connector may be configured to removably couple with the inner contour of the second connecting portion **158** of the elongate portion **144** which will act as a female connector. In yet another embodiment, the inner diameter of the first connecting portion **156** may be larger than the outer diameter of the second connecting portion **158.** The inner contour of the first connecting portion **156** may be configured to removably couple with an outer contour of the second connecting portion **158.**

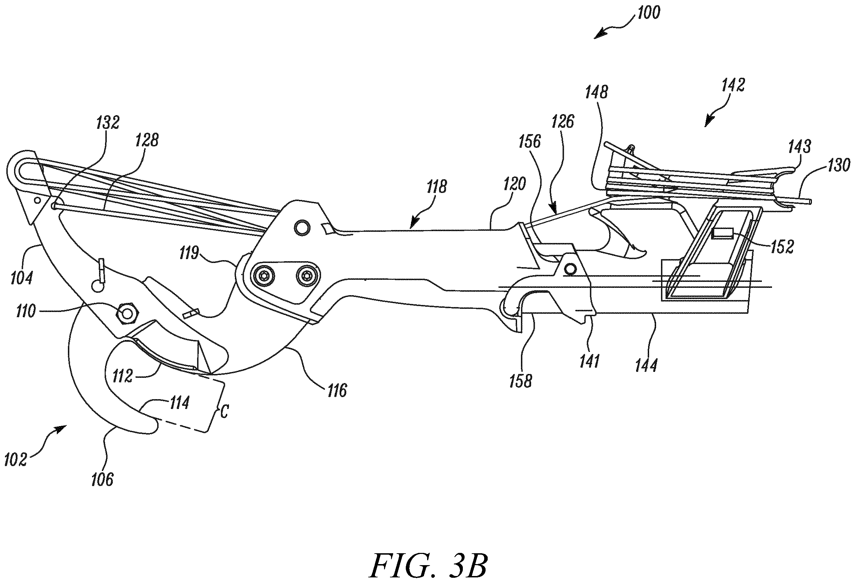

FIG. **3B** illustrates a side view of the tool **100** with the pulling member **142** of FIG. **3A** in a coupled configuration with the intermediate portion **118.** The second connecting portion **158** of the pulling member **142** is partly received in the cavity **160** of the first connecting portion **156** of the intermediate portion **118.** In an embodiment, the safety clasp **141** positioned at the first connecting portion **156** of the intermediate portion **118** may be configured to support the second connecting portion **158** of the pulling member **142.** Further, the safety clasp **141** may be in an open position when the outer contour of the second connecting portion **158** of the pulling member **142** is getting stored in the cavity **160** of the first connecting portion **156** of the intermediate portion **118.** The safety clasp **141** is then placed in a closed position to contact with the second connecting portion **158,** when the outer contour of the second connecting portion **158** of the pulling member **142** is stored in the cavity **160** of the first connecting portion **156.** The safety clasp **141** may frictionally lock the pulling member **142** with the intermediate portion **118** and facilitates the storage of the pulling member **142** within the intermediate portion **118.** In another embodiment, the locking of the pulling member **142** and the intermediate portion **118** may also be carried out by a knob (not shown) positioned on the second connecting portion **158** of the pulling member **142.** The knob may be detachably coupled to a recess in the first connecting portion **156** of the intermediate portion **118.** In yet another embodiment, the pulling member **142** may have a clip-like element which may be configured to couple with the pole **140** or the intermediate portion **118.**

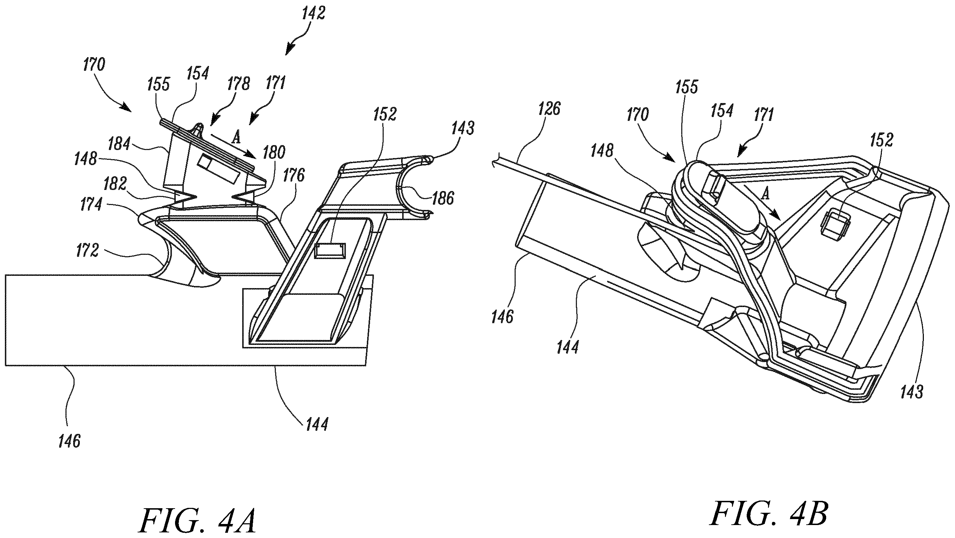

**..** FIGS. **4A** and **4B** illustrate exemplary views of a D-shaped pulling member **142,** according to an embodiment of the present invention. The pulling member **142** includes the gripping portion **143** having a D-shaped structure. The D-shaped structure of the gripping portion **143** of the pulling member **142** may provide good gripping and increased pulling force to pull the drive cable **126** during the cutting action. The pulling member **142** includes a coiling arrangement **170** for the drive cable **126** which may store extra drive cable **126.** The coiling arrangement **170** may facilitate the coiling of the drive cable **126** on the pulling member **142** and includes a first curved portion **172,** a second curved portion **174,** and a third curved portion **176.** The first curved portion **172** may have a large radius which facilitates gripping of the pulling member **142** by the user while holding at the auxiliary gripping portion **146.** The second curved portion **174** may be configured to facilitate the coiling of the extra drive cable **126.** The third curved portion **176** may be configured to facilitate a first winding of the drive cable **126** around a first element **178** integral with the pulling member **142.** The first element **178** includes a first contact surface **180,** a second contact surface **182,** and a third contact surface **184.** The gripping portion **143** includes a fourth contact surface **186.** The second end **130** of the drive cable **126** contacts the first point of contact **148** on the first contact surface **180** and then coils around the first element **178** to contact the second contact surface **182.** The fixation clip **152** fixes the drive cable **126** which may facilitate the length of the rope to be fixed. Further, the coiling is executed about the first element **178** and the gripping portion **143.** The coiling of the drive cable **126** is achieved between the third contact surface **184** and the fourth contact surface **186.** Further, two gripping portions of the D-shaped pulling member **142,** the gripping portion **143** and the auxiliary gripping portion **146,** enables a user to grip the D-shaped pulling member **142** with a multi-grip functionality.

As illustrated in FIG. **4B** which shows the coiling of the drive cable **126** about the pulling member **142.** The pulling member **142** may also include an uncoiling arrangement **171.** The uncoiling arrangement **171** includes an uncoil element **154** which is spring actuated. The uncoil element **154** with a protruding end **155** is configured to remove the coil of the drive cable **126** from the pulling member **142.** The uncoil element **154** in its closed position supports the drive cable **126** onto the first element **178** with the protruding end **155** of the uncoil element **154.** When the uncoil element **154** slides in a direction A by overcoming the spring force; the uncoiling of the drive cable **126** is performed.

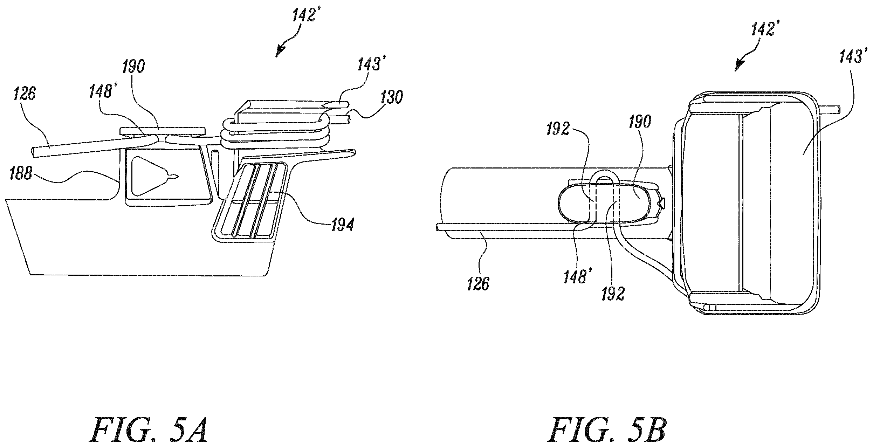

FIGS. **5A** and **5B** illustrate an exemplary views of a D-shaped pulling member **142'** according to another embodiment of the present invention. The D-shaped pulling member **142'** includes a gripping portion **143'** having a D-shaped structure. The D-shaped pulling member **142'** includes a projection component **188** with a supporting head **190.** The supporting head **190** includes two holes **192** arranged adjacent to each other. The second end **130** of the drive cable **126** passes through the hole **192** from one side of the tool **100** forming a first point of contact **148'** with the D-shaped pulling member **142'** and is further passed through the other hole **192** from other side of the pulling member 142. Further, the second end **130** of the drive cable **126** is coiled on the gripping portion **143'** to wind the extra length of the drive cable **126** as shown in FIGS. **5A** and **5B****.** The D-shaped pulling member **142'** with the two holes **192** offers the flexibility to move the pulling member **142'** in both directions easily as the drive cable **126** can run through the holes **192.** The D-shaped pulling member **142'** can be held in the adjusted position even if the user wants to take off his both hands, owing to the friction. Moreover, the friction within the two holes **192** against the drive cable **126** is enough to prevent the D-shaped pulling member **142'** from falling down through its own weight. Further, the D-shaped pulling member **142'** includes a plurality of ribs **194** on each side of the gripping portion **143'.** The ribs **194** are configured to provide structural stiffness to the pulling member **142'.**

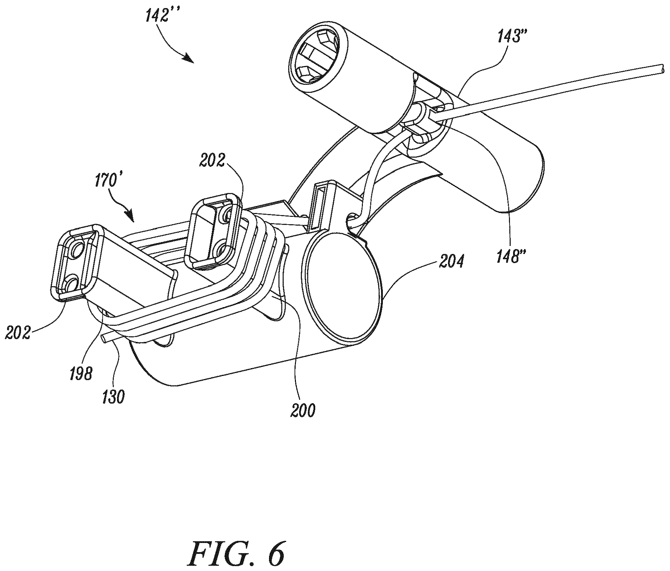

FIG. **6** illustrates a perspective view of a T-shaped pulling member **142",** according to yet another embodiment of the present invention. The pulling member **142"** includes a gripping portion **143"** having a T-shaped structure. The second end **130** of the drive cable **126** contacts the gripping portion **143"** forming a first point of contact **148".** Further, the pulling member **142"** with a T-shaped structure also includes a coiling arrangement **170'** for the drive cable **126.** The coiling arrangement **170'** may include a first coiling element **198** and a second coiling element **200.** The drive cable **126** is coiled around the first and second coiling elements **198, 200.** The first and second coiling elements **198, 200** have a protruding end **202** which may be configured to prevent the sliding of the drive cable **126.** An inner contour of the coupling portion **204** of the pulling member **142"** may be slidably mounted on the pole **140.**

The various details of the coiling arrangement **170, 170'** and the uncoiling arrangement **171,** as illustrated in the FIGS. **4A, 4B** and **6****,** are purely exemplary in nature, and the coiling and uncoiling of the drive cable **126** about the pulling member **142, 142',** and **142"** may be of any other design within the scope of the present invention.

In the drawings and specification, there have been disclosed preferred embodiments and examples of the invention and, although specific terms are employed, they are used in a generic and descriptive sense only and not for the purpose of limitation of the scope of the invention being set forth in the following claims.

### PULLING MEMBER FOR PRUNING TOOL PART LIST

- 100: Tool
- 102: Implement
- 104: Movable blade
- 106: Stationary blade
- 110: Pivot point
- 112: Cutting edge
- 114: Cutting edge
- 116: Distal end
- 118: Intermediate portion
- 119: First end
- 120: Second end
- 126: Drive cable
- 128: First end
- 130: Second end
- 132: Connect point
- 134: Channel
- 135: Second point of contact
- 135': Second point of contact
- 138: Transmission System
- 140: Pole
- 140A: First tube
- 140B: Second tube
- 140C: Coupler
- 141: Safety clasp
- 142: Pulling member
- 142': Pulling member
- 142": Pulling member
- 143: Gripping portion
- 144: Elongate portion
- 145: Hollow portion
- 146: Auxiliary gripping portion
- 148: First point of contact
- 148': First point of contact
- 148": First point of contact
- 149: Guiding member
- 151: Hole
- 150: Outer surface
- 152: Fixation clip
- 154: Uncoil element
- 155: Protruding end
- 156: First connecting portion
- 158: Second connecting portion
- 160: Cavity
- 143': Gripping portion
- 143": Gripping portion
- 170: Coiling arrangement
- 171: Uncoiling arrangement
- 170': Coiling arrangement
- 172: First curved portion
- 174: Second curved portion
- 176: Third curved portion
- 178: First element
- 180: First contact surface
- 182: Second contact surface
- 184: Third contact surface
- 186: Fourth contact surface
- 188: Projection component
- 190: Supporting head
- 192: Holes
- 194: Ribs
- 198: First coiling element
- 200: Second coiling element
- 202: Protruding end
- 204: Coupling portion
- PP': Longitudinal axis
- C: Cutting jaw
- GG': Gripping axis
- O: First distance
- O': Second distance
- α: Angle

## Claims

1. A tool **(100)** comprising:
an implement **(102)** comprising at least one movable component;
a drive cable **(126)** attached to the at least one movable component at a first end **(128)** of the drive cable;
a pole **(140)** coupled with the implement; and
a pulling member **(142)** slidably mounted on the pole, wherein a second end **(130)** of the drive cable is coupled to the pulling member, wherein a sliding movement of the pulling member is configured to actuate the at least one movable component of the implement through the drive cable, and wherein the pulling member comprises a gripping portion **(143)** defining a gripping axis **(GG'),**
wherein the gripping axis **(GG')** is transverse to the longitudinal axis of the pole **(PP')** and is offset **(O)** relative to an outer surface **(150)** of the pole;
wherein a first point of contact **(148)** of the drive cable **(126)** with the pulling member **(142)** from a direction of the implement **(102)** is offset from the outer surface of the pole **(140)** at a distance **(O')**
**characterised in that**
the distance **(O')** is close to the offset (O) of the gripping axis **(GG');** and
the drive cable **(126)** extends along a line starting from the first point of contact towards the implement **(102)** such that the drive cable **(126)** forms an angle **(α),** at a second point of contact **(147, 147')** of the drive cable towards the implement, relative to the longitudinal axis of the pole **(PP'),** wherein the angle **(α)** is equal to or less than 20 degrees.

2. The tool according to claim 1, wherein the angle formed between the drive cable extending along the line starting from the first point of contact to the second point of contact and the longitudinal axis of the pole is about 5 degrees.

3. The tool according to claim 1, wherein the gripping portion is a T-shaped structure.

4. The tool according to claim 1, wherein the gripping portion is a D-shaped structure.

5. The tool according to claims 1-4, wherein the pulling member further comprises an auxiliary gripping portion **(146)** the auxiliary gripping portion being disposed along the longitudinal axis of the pole.

6. The tool according to claim5, wherein the auxiliary gripping portion comprises a hollow portion **(145),** the hollow portion being slidably mounted on the pole.

7. The tool according to claims 1-6, wherein the pulling member comprises a drive cable coiling arrangement **(170,170').**

8. The tool according to claim 7, wherein the pulling member comprises a drive cable uncoiling arrangement **(171).**

9. The tool according to claim 1, wherein the pulling member further comprises a connecting portion **(158),** the connecting portion configured to be removably connected to an intermediate portion **(118)** of the implement.

10. The tool according to claim 9, wherein the intermediate portion of the implement is formed as a handle, the handle comprising a cavity **(160)** configured to removably receive the connecting portion.

11. The tool according to claim 10, wherein the pulling member further comprises an auxiliary gripping portion **(146)** the auxiliary gripping portion being disposed along the longitudinal axis of the pole,
and wherein the auxiliary gripping portion is formed as the connecting portion.

12. The tool according to any of the preceding claims, wherein the at least one movable component is a movable blade **(104),** and wherein the implement further comprises a stationary blade **(106),** the movable blade being pivotally connected to the stationary blade.

13. The tool according to any of the preceding claims is a pruning shear **(100).**

## Patentansprüche

1. Werkzeug (100) umfassend:
ein Instrument (102) umfassend mindestens eine bewegliche Komponente;
ein Antriebskabel (126), das an der mindestens einen beweglichen Komponente an einem ersten Ende (128) des Antriebskabels befestigt ist;
einen Schaft (140), der mit dem Instrument gekoppelt ist; und
ein Zugelement (142), das schiebbar auf dem Schaft befestigt ist, wobei ein zweites Ende (130) des Antriebskabels mit dem Zugelement gekoppelt ist, wobei eine Schiebebewegung des Zugelements eingerichtet ist, um die mindestens eine bewegliche Komponente des Instruments durch das Antriebskabel in Bewegung zu setzen, und wobei das Zugelement einen Greifabschnitt (143) umfasst, der eine Greifachse (GG') definiert,
wobei die Greifachse (GG') quer zu der Längsachse des Schafts (PP') verläuft und relativ zu einer äußeren Oberfläche (150) des Schafts versetzt ist (O);
wobei ein erster Kontaktpunkt (148) des Antriebskabels (126) mit dem Zugelement (142) von einer Richtung des Instruments (102) versetzt ist um einen Abstand (O') von der äußeren Oberfläche des Schafts (140);
**dadurch gekennzeichnet, dass**
der Abstand (O') nahe zu der Versetzung (O) der Greifachse (GG') ist; und
das Antriebskabel (126) entlang einer Linie verläuft, die startet von dem ersten Kontaktpunkt hin zu dem Instruments (102), so dass das Antriebskabel (126) einen Winkel (α) ausbildet, bei einem zweiten Kontaktpunkt (147, 147') des Antriebskabels hin zu dem Instrument, relativ zu der Längsachse des Schafts (PP'), wobei der Winkel (α) gleich oder kleiner als 20 Grad beträgt.

2. Werkzeug nach Anspruch 1, wobei der Winkel, der zwischen dem Antriebskabel, das entlang der Linie startend von dem ersten Kontaktpunkt zu dem zweiten Kontaktpunkt verläuft, und der Längsachse des Schafts ausgebildet wird, in etwa 5 Grad beträgt.

3. Werkzeug nach Anspruch 1, wobei der Greifabschnitt eine T-förmige Struktur aufweist.

4. Werkzeug nach Anspruch 1, wobei der Greifabschnitt eine D-förmige Struktur aufweist.

5. Werkzeug nach den Ansprüchen 1-4, wobei das Zugelement des Weiteren einen Hilfsgreifabschnitt (146) umfasst, wobei der Hilfsgreifabschnitt entlang der Längsachse des Schafts angeordnet ist.

6. Werkzeug nach Anspruch 5, wobei der Hilfsgreifabschnitt einen hohlen Abschnitt (145) umfasst, wobei der hohle Abschnitt schiebbar auf dem Schaft befestigt ist.

7. Werkzeug nach den Ansprüchen 1-6, wobei das Zugelement eine Aufwickelanordnung für das Antriebskabel (170, 170') umfasst.

8. Werkzeug nach Anspruch 7, wobei das Zugelement eine Abwickelanordnung für das Antriebskabel (171) umfasst.

9. Werkzeug nach Anspruch 1, wobei das Zugelement des Weiteren einen Verbindungsabschnitt (158) umfasst, wobei der Verbindungsabschnitt eingerichtet ist, um lösbar mit einem Zwischenabschnitt (118) des Instruments verbunden zu sein.

10. Werkzeug nach Anspruch 9, wobei Zwischenabschnitt des Instruments als ein Haltegriff geformt ist, wobei der Haltegriff eine Vertiefung (160) umfasst, die eingerichtet ist, um lösbar den Verbindungsabschnitt aufzunehmen.

11. Werkzeug nach Anspruch 10, wobei das Zugelement des Weiteren einen Hilfsgreifabschnitt (146) umfasst, wobei der Hilfsgreifabschnitt entlang der Längsachse des Schafts angeordnet ist,
und wobei der Hilfsgreifabschnitt als der Verbindungsabschnitt ausgebildet ist.

12. Werkzeug nach einem der vorhergehenden Ansprüche, wobei die zumindest eine bewegliche Komponente eine bewegliche Klinge (104) ist, und wobei das Instrument des Weiteren eine unbewegliche Klinge (106) umfasst, wobei die bewegliche Klinge schwenkbar mit der unbeweglichen Klinge verbunden ist.

13. Werkzeug nach einem der vorhergehenden Ansprüche, das eine Gartenschere (100) ist.

## Revendications

1. Un outil (100) comprenant :
un accessoire (102) comprenant au moins un composant mobile ;
un câble d'entraînement (126) attaché à l'au moins un composant mobile à une première extrémité (128) du câble d'entraînement ;
un poteau (140) couplé à l'accessoire ; et
un élément de traction (142) monté de manière coulissante sur le poteau, dans lequel une seconde extrémité (130) du câble d'entraînement est couplée à l'élément de traction,
dans lequel un mouvement de coulissement de l'élément de traction est configuré pour actionner l'au moins un composant mobile de l'accessoire à travers du câble d'entraînement, et dans lequel l'élément de traction comprend une partie de préhension (143) définissant un axe de préhension (GG'),
dans lequel l'axe de préhension (GG') est transversal à l'axe longitudinal du poteau (PP') et est décalé (O) par rapport à une surface externe (150) du poteau ;
dans lequel un premier point de contact (148) du câble d'entraînement (126) avec l'élément de traction (142) à partir d'une direction de l'accessoire (102) est décalé de la surface externe du poteau (140) à une distance (O')
**caractérisé en ce que**
la distance (O') est proche du décalage (O) de l'axe de préhension (GG'); et
le câble d'entraînement (126) s'étend le long d'une ligne partant du premier point de contact vers l'accessoire (102) de sorte que le câble d'entraînement (126) forme un angle (α), à un deuxième point of contact (147, 147') du câble d'entraînement vers l'accessoire, par rapport à l'axe longitudinal du poteau (PP'), dans lequel l'angle (α) est inférieur ou égal à 20 degrés.

2. Outil selon la revendication 1, dans lequel l'angle formé entre le câble d'entraînement s'étendant le long de la ligne partant du premier point de contact vers le deuxième point of contact et l'axe longitudinal du poteau est d'environ 5 degrés.

3. Outil selon la revendication 1, dans lequel la partie de préhension est une structure en forme de T.

4. Outil selon la revendication 1, dans lequel la partie de préhension est une structure en forme de D.

5. Outil selon les revendications 1-4, dans lequel l'élément de traction comprend en outre une partie de préhension auxiliaire (146) la une partie de préhension auxiliaire étant disposée le long de l'axe longitudinal du poteau du poteau.

6. Outil selon la revendication 5, dans lequel la partie de préhension auxiliaire comprend une partie creuse (145), la partie creuse étant montée de manière coulissante sur le poteau.

7. Outil selon les revendications 1-6, dans lequel l'élément de traction comprend un agencement d'enroulement de câble d'entraînement (170,170').

8. Outil selon la revendication 7, dans lequel l'élément de traction comprend un agencement de déroulage de câble d'entraînement (171).

9. Outil selon la revendication 1, dans lequel l'élément de traction comprend en outre une partie de connexion (158), la partie de connexion étant configurée pour être reliée de façon amovible à une partie intermédiaire (118) de l'accessoire.

10. Outil selon la revendication 9, dans lequel la partie intermédiaire de l'accessoire est formée comme une poignée, la poignée comprenant une cavité (160) configurée pour recevoir de manière amovible la partie de connexion.

11. Outil selon la revendication 10, dans lequel l'élément de traction comprend en outre une partie de préhension auxiliaire (146) la partie de préhension auxiliaire étant disposée le long de l'axe longitudinal du poteau,
et dans lequel la partie de préhension auxiliaire est formée en tant que la partie de connexion.

12. Outil selon l'une quelconque des revendications précédentes, dans lequel l' moins un composant mobile est une lame mobile (104), et dans lequel l'accessoire comprend en outre une lame stationnaire (106), la lame mobile étant reliée de manière pivotante à la lame stationnaire.

13. Outil selon l'une quelconque des revendications précédentes étant un cisaillement d'élagage (100).
